# EUROPEAN PATENT SPECIFICATION

(11) **EP 4 252 062 B1**
(45) Date of publication and mention of the grant of the patent: **09.12.2026**
(21) Application number: 21827767.1
(22) Date of filing: 23.11.2021
(51) Int. Cl.: G02B 27/01, G02B 27/10, G02B 27/00, G02B 5/20

(54) **DISPLAY SYSTEMS HAVING IMAGING CAPABILITIES**
ANZEIGESYSTEME MIT ABBILDUNGSFÄHIGKEITEN
SYSTÈMES D'AFFICHAGE AYANT DES CAPACITÉS D'IMAGERIE

(30) Priority: 30.11.2020 US 202063119509 P
(43) Date of publication of application: 04.10.2023
(73) Proprietor: Apple Inc., Cupertino, CA 95014 (US)
(72) Inventor: CHOI, Hyungryul, Cupertino, CA 95014 (US); BHAKTA, Vikrant, Cupertino, CA 95014 (US)
(74) Representative: COPA Copenhagen Patents
(86) International application number: PCT/US2021/060619
(87) International publication number: WO 2022/115476

(56) References cited:
- WO-A1-2019/104413
- WO-A1-2020/010271
- WO-A1-2021/051067
- US-A1- 2018 052 325
- US-A1- 2018 275 410
- US-A1- 2019 025 590
- US-A1- 2019 056 599
- HELLMAN BRANDON ET AL: "Angular and Spatial Light Modulation by Single Digital Micromirror Device for Multi-Image Output and Nearly-Doubled Étendue", OPTICS EXPRESS, vol. 27, no. 15, 22 July 2019 (2019-07-22), US, pages 21477 - 21496, XP055790824, ISSN: 1094-4087, DOI: 10.1364/FIO.2019.FM3C.4

## Description

This application claims priority to U.S. Provisional Patent Application No. 63/119,509, filed November 30, 2020.

### Background

This relates generally to optical systems and, more particularly, to optical systems for displays.

Electronic devices may include displays that present images to a user's eyes. For example, devices such as virtual reality and augmented reality headsets may include displays with optical elements that allow users to view the displays.

It can be challenging to design devices such as these. If care is not taken, the components used in displaying content may be unsightly and bulky, can consume excessive power, and may not exhibit desired levels of optical performance.

Relevant prior art is provided by the patent publication US 2019/0025590 A1, which discloses a see-through computer display system incorporating integrated infrared eye imaging technologies, wherein a waveguide wedge assembly directs display light to a user's eye and an eye imaging camera is positioned to capture light reflected from the eye.

### Summary

An electronic device such as a head-mounted device may have one or more near-eye displays that produce images for a user as defined in appended independent claim 1.

### Brief Description of the Drawings

FIG. 1 is a diagram of an illustrative display system having imaging capabilities in accordance with some embodiments.
FIG. 2 is a top view of an illustrative optical system for a display having a display module that provides image light to a waveguide in accordance with some embodiments.
FIG. 3 is a top view of an illustrative display module having a reflective display panel that provides image light to a waveguide and that provides infrared light from the waveguide to an infrared image sensor in the display module in accordance with some embodiments.
FIG. 4 is a top view of an illustrative display module having a reflective display panel that provides image light to a waveguide, that provides infrared light from an infrared emitter in the display module to the waveguide, and that provides infrared light from the waveguide to an infrared image sensor in the display module in accordance with some embodiments.
FIG. 5 is a flow chart of illustrative operations involved in using a reflective display panel in a display module to provide image light to a waveguide and to provide infrared light from the waveguide to an infrared image sensor in the display module in accordance with some embodiments.
FIG. 6 is a timing diagram showing an illustrative time multiplexing scheme that may be used by a reflective display panel in a display module to provide image light to a waveguide and to provide infrared light from the waveguide to an infrared image sensor in the display module in accordance with some embodiments.
FIG. 7 is a top view showing an additional arrangement, not covered by the claimed subject-matter, in which an illustrative infrared image sensor may receive infrared light from a waveguide through a reflective surface of an input coupling prism for the waveguide in accordance with some embodiments.
FIG. 8 is a top view showing an additional arrangement, not covered by the claimed subject-matter, in which an illustrative infrared emitter may transmit infrared light and an infrared image sensor may receive infrared light through a reflective surface of an input coupling prism for the waveguide.
FIG. 9 is a front view of an illustrative display system having a display module that provides image light to a waveguide and having a world-facing camera subject to potential interference from the image light in accordance with some embodiments.
FIG. 10 is a flow chart of illustrative operations involved in operating a world-facing camera of the type shown in FIG. 9 without interference from image light produced by a display module in accordance with some embodiments.
FIG. 11 is a timing diagram showing an illustrative time multiplexing scheme that may be used by a display module and a world-facing camera to mitigate interference between image light from the display module and the world-facing camera in accordance with some embodiments.

### Detailed Description

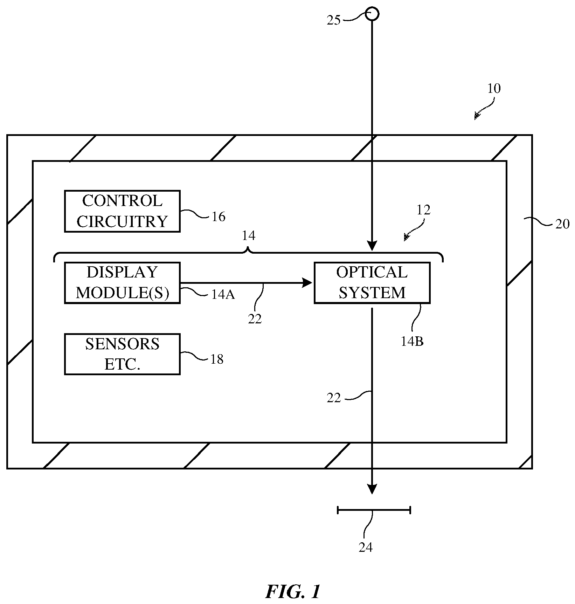

An illustrative system having a device with one or more near-eye display systems is shown in FIG. 1. System 10 may be a head-mounted device having one or more displays such as near-eye displays 14 mounted within support structure (housing) 20. Support structure 20 may have the shape of a pair of eyeglasses (e.g., supporting frames), may form a housing having a helmet shape, or may have other configurations to help in mounting and securing the components of near-eye displays 14 on the head or near the eye of a user. Near-eye displays 14 may include one or more display modules such as display modules 14A and one or more optical systems such as optical systems 14B. Display modules 14A may be mounted in a support structure such as support structure 20. Each display module 14A may emit light 22 that is redirected towards a user's eyes at eye box 24 using an associated one of optical systems 14B. Light 22 may sometimes be referred to herein as image light 22 (e.g., light that contains and/or represents something viewable such as a scene or object).

The operation of system 10 may be controlled using control circuitry 16. Control circuitry 16 may include storage and processing circuitry for controlling the operation of system 10. Circuitry 16 may include storage such as hard disk drive storage, nonvolatile memory (e.g., electrically-programmable-read-only memory configured to form a solid state drive), volatile memory (e.g., static or dynamic random-access-memory), etc. Processing circuitry in control circuitry 16 may be based on one or more microprocessors, microcontrollers, digital signal processors, baseband processors, power management units, audio chips, graphics processing units, application specific integrated circuits, and other integrated circuits. Software code (instructions) may be stored on storage in circuitry 16 and run on processing circuitry in circuitry 16 to implement operations for system 10 (e.g., data gathering operations, operations involving the adjustment of components using control signals, image rendering operations to produce image content to be displayed for a user, etc.).

System 10 may include input-output circuitry such as input-output devices 12. Input-output devices 12 may be used to allow data to be received by system 10 from external equipment (e.g., a tethered computer, a portable device such as a handheld device or laptop computer, or other electrical equipment) and to allow a user to provide system 10 with user input. Input-output devices 12 may also be used to gather information on the environment in which system 10 (e.g., head-mounted device 10) is operating. Output components in devices 12 may allow system 10 to provide a user with output and may be used to communicate with external electrical equipment. Input-output devices 12 may include sensors and other components 18 (e.g., world-facing cameras such as image sensors for gathering images of real-world object that are digitally merged with virtual objects on a display in system 10, accelerometers, depth sensors, light sensors, haptic output devices, speakers, batteries, wireless communications circuits for communicating between system 10 and external electronic equipment, etc.). If desired, components 18 may include gaze tracking sensors that gather gaze image data from a user's eye at eye box 24 to track the direction of the user's gaze in real time. The gaze tracking sensors may include at least one infrared (IR) emitter that emits infrared or near-infrared light that is reflected off of portions of the user's eyes. At least one infrared image sensor may gather infrared image data from the reflected infrared or near-infrared light. Control circuitry 16 may process the gathered infrared image data to identify and track the direction of the user's gaze, for example.

Display modules 14A (sometimes referred to herein as display engines 14A, light engines 14A, or projectors 14A) may include reflective displays (e.g., displays with a light source that produces illumination light that reflects off of a reflective display panel to produce image light such as liquid crystal on silicon (LCOS) displays, ferroelectric liquid crystal on silicon (fLCOS) displays, digital-micromirror device (DMD) displays, or other spatial light modulators), emissive displays (e.g., micro-light-emitting diode (uLED) displays, organic light-emitting diode (OLED) displays, laser-based displays, etc.), or displays of other types. Light sources in display modules 14A may include uLEDs, OLEDs, LEDs, lasers, combinations of these, or any other desired light-emitting components.

Optical systems 14B may form lenses that allow a viewer (see, e.g., a viewer's eyes at eye box 24) to view images on display(s) 14. There may be two optical systems 14B (e.g., for forming left and right lenses) associated with respective left and right eyes of the user. A single display 14 may produce images for both eyes or a pair of displays 14 may be used to display images. In configurations with multiple displays (e.g., left and right eye displays), the focal length and positions of the lenses formed by components in optical system 14B may be selected so that any gap present between the displays will not be visible to a user (e.g., so that the images of the left and right displays overlap or merge seamlessly).

If desired, optical system 14B may contain components (e.g., an optical combiner, etc.) to allow real-world image light from real-world images or objects 25 to be combined optically with virtual (computer-generated) images such as virtual images in image light 22. In this type of system, which is sometimes referred to as an augmented reality system, a user of system 10 may view both real-world content and computer-generated content that is overlaid on top of the real-world content. Camera-based augmented reality systems may also be used in system 10 (e.g., in an arrangement in which a world-facing camera captures real-world images of object 25 and this content is digitally merged with virtual content at optical system 14B).

System 10 may, if desired, include wireless circuitry and/or other circuitry to support communications with a computer or other external equipment (e.g., a computer that supplies display 14 with image content). During operation, control circuitry 16 may supply image content to display 14. The content may be remotely received (e.g., from a computer or other content source coupled to system 10) and/or may be generated by control circuitry 16 (e.g., text, other computer-generated content, etc.). The content that is supplied to display 14 by control circuitry 16 may be viewed by a viewer at eye box 24.

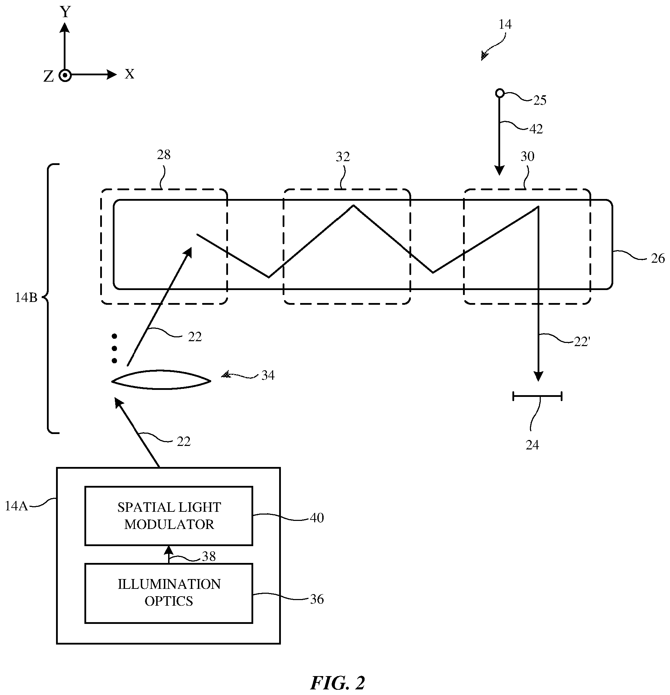

FIG. 2 is a top view of an illustrative display 14 that may be used in system 10 of FIG. 1. As shown in FIG. 2, near-eye display 14 may include one or more display modules such as display module 14A and an optical system such as optical system 14B. Optical system 14B may include optical elements such as one or more waveguides 26. Waveguide 26 may include one or more stacked substrates (e.g., stacked planar and/or curved layers sometimes referred to herein as waveguide substrates) of optically transparent material such as plastic, polymer, glass, etc.

If desired, waveguide 26 may also include one or more layers of holographic recording media (sometimes referred to herein as holographic media, grating media, or diffraction grating media) on which one or more diffractive gratings are recorded (e.g., holographic phase gratings, sometimes referred to herein as holograms). A holographic recording may be stored as an optical interference pattern (e.g., alternating regions of different indices of refraction) within a photosensitive optical material such as the holographic media. The optical interference pattern may create a holographic phase grating that, when illuminated with a given light source, diffracts light to create a three-dimensional reconstruction of the holographic recording. The holographic phase grating may be a non-switchable diffractive grating that is encoded with a permanent interference pattern or may be a switchable diffractive grating in which the diffracted light can be modulated by controlling an electric field applied to the holographic recording medium. Multiple holographic phase gratings (holograms) may be recorded within (e.g., superimposed within) the same volume of holographic medium if desired. The holographic phase gratings may be, for example, volume holograms or thin-film holograms in the grating medium. The grating media may include photopolymers, gelatin such as dichromated gelatin, silver halides, holographic polymer dispersed liquid crystal, or other suitable holographic media.

Diffractive gratings on waveguide 26 may include holographic phase gratings such as volume holograms or thin-film holograms, meta-gratings, or any other desired diffractive grating structures. The diffractive gratings on waveguide 26 may also include surface relief gratings formed on one or more surfaces of the substrates in waveguides 26, gratings formed from patterns of metal structures, etc. The diffractive gratings may, for example, include multiple multiplexed gratings (e.g., holograms) that at least partially overlap within the same volume of grating medium (e.g., for diffracting different colors of light and/or light from a range of different input angles at one or more corresponding output angles).

Optical system 14B may include collimating optics 34. Collimating optics 34 may sometimes be referred to herein as eyepiece 34, collimating lens 34, optics 34, or lens 34. Collimating optics 34 may include one or more lens elements that help direct image light 22 towards waveguide 26. Collimating optics 34 may be omitted if desired. If desired, display module(s) 14A may be mounted within support structure 20 of FIG. 1 while optical system 14B may be mounted between portions of support structure 20 (e.g., to form a lens that aligns with eye box 24). Other mounting arrangements may be used, if desired.

As shown in FIG. 2, display module 14A may generate image light 22 associated with image content to be displayed to (at) eye box 24. In the example of FIG. 2, display module 14A includes illumination optics 36 and spatial light modulator 40. Illumination optics 36 may produce illumination light 38 (sometimes referred to herein as illumination 38) and may illuminate spatial light modulator 40 using illumination light 38. Spatial light modulator 40 may modulate illumination light 38 (e.g., using image data) to produce image light 22 (e.g., image light that includes an image as identified by the image data). Spatial light modulator 40 may be a reflective spatial light modulator (e.g., a DMD modulator, an LCOS modulator, an fLCOS modulator, etc.) or a transmissive spatial light modulator (e.g., an LCD modulator). These examples are merely illustrative and, if desired, display module 14A may include an emissive display panel instead of a spatial light modulator. Examples in which spatial light modulator 40 is a reflective spatial light modulator are described herein as an example. In other suitable arrangements, display module 14A be an emissive display module that includes an emissive display panel rather than a spatial light modulator.

Image light 22 may be collimated using collimating optics 34. Optical system 14B may be used to present image light 22 output from display module 14A to eye box 24. Optical system 14B may include one or more optical couplers such as input coupler 28, cross-coupler 32, and output coupler 30. In the example of FIG. 2, input coupler 28, cross-coupler 32, and output coupler 30 are formed at or on waveguide 26. Input coupler 28, cross-coupler 32, and/or output coupler 30 may be completely embedded within the substrate layers of waveguide 26, may be partially embedded within the substrate layers of waveguide 26, may be mounted to waveguide 26 (e.g., mounted to an exterior surface of waveguide 26), etc.

The example of FIG. 2 is merely illustrative. One or more of these couplers (e.g., cross-coupler 32) may be omitted. Optical system 14B may include multiple waveguides that are laterally and/or vertically stacked with respect to each other. Each waveguide may include one, two, all, or none of couplers 28, 32, and 30. Waveguide 26 may be at least partially curved or bent if desired.

Waveguide 26 may guide image light 22 down its length via total internal reflection. Input coupler 28 may be configured to couple image light 22 from display module(s) 14A into waveguide 26, whereas output coupler 30 may be configured to couple image light 22 from within waveguide 26 to the exterior of waveguide 26 and towards eye box 24. Input coupler 28 may include an input coupling prism if desired. As an example, display module(s) 14A may emit image light 22 in the +Y direction towards optical system 14B. When image light 22 strikes input coupler 28, input coupler 28 may redirect image light 22 so that the light propagates within waveguide 26 via total internal reflection towards output coupler 30 (e.g., in the +X direction). When image light 22 strikes output coupler 30, output coupler 30 may redirect image light 22 out of waveguide 26 towards eye box 24 (e.g., back in the -Y direction). In scenarios where cross-coupler 32 is formed at waveguide 26, cross-coupler 32 may redirect image light 22 in one or more directions as it propagates down the length of waveguide 26, for example.

Input coupler 28, cross-coupler 32, and/or output coupler 30 may be based on reflective and refractive optics or may be based on holographic (e.g., diffractive) optics. In arrangements where couplers 28, 30, and 32 are formed from reflective and refractive optics, couplers 28, 30, and 32 may include one or more reflectors (e.g., an array of micromirrors, partial mirrors, louvered mirrors, or other reflectors). In arrangements where couplers 28, 30, and 32 are based on holographic optics, couplers 28, 30, and 32 may include diffractive gratings (e.g., volume holograms, surface relief gratings, etc.). Any desired combination of holographic and reflective optics may be used to form couplers 28, 30, and 32.

In one suitable arrangement that is sometimes described herein as an example, output coupler 30 is formed from diffractive gratings or micromirrors embedded within waveguide 26 (e.g., volume holograms recorded on a grating medium stacked between transparent polymer waveguide substrates, an array of micromirrors embedded in a polymer layer interposed between transparent polymer waveguide substrates, etc.), whereas input coupler 28 includes a prism mounted to an exterior surface of waveguide 26 (e.g., an exterior surface defined by a waveguide substrate that contacts the grating medium or the polymer layer used to form output coupler 30) or one or more layers of diffractive grating structures.

In addition to displaying images using image light 22 at eye box 24, display 14 may also have imaging capabilities. For example, display 14 may include a world-facing camera that captures images of external objects such as object 25. If desired, display 14 may additionally or alternatively include one or more infrared image sensors. The infrared image sensors may be used to ensure that the display module 14A and optical system 14B for a left eye box 24 is properly aligned with the display module 14A and optical system 14B for a right eye box 24. The infrared image sensors may additionally or alternatively be used to capture gaze tracking information.

For example, display 14 may include one or more infrared emitters. The infrared emitters may emit light at infrared or near-infrared wavelengths. The light emitted by the infrared emitters may sometimes be referred to herein as infrared light, even if the light includes near-infrared wavelengths. The infrared light may be reflected off of portions of the user's eye at eye box 24. If desired, waveguide 26 may be used to help guide the infrared light towards eye box 24. One or more infrared image sensors may generate infrared image sensor data by capturing the infrared light reflected off of the user's eye. Control circuitry 16 may use the infrared image sensor data to identify a direction of the user's gaze, to track the direction of the user's gaze over time, and/or to ensure proper optical alignment between the left and right eye boxes (e.g., control circuitry 16 may effectuate digital and/or mechanical adjustments to one or more of the display modules to ensure that there is proper optical alignment between the left and right eye boxes for satisfactory binocular vision). If desired, waveguide 26 may be used to help guide the reflected infrared light towards the infrared image sensor.

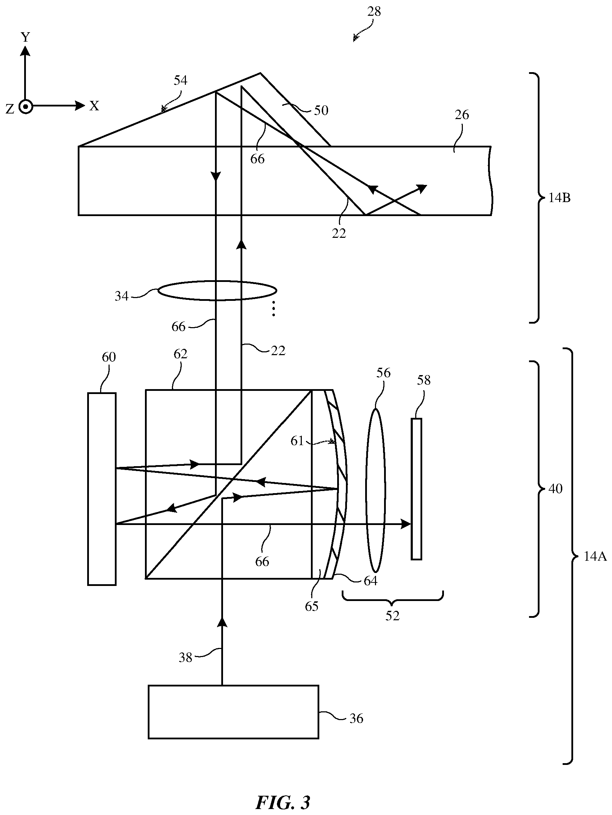

In order to minimize the volume of display 14, display module 14A may include at least one of the infrared image sensors. The infrared image sensor may gather infrared image sensor data for performing gaze tracking and/or optical alignment operations. FIG. 3 is a diagram showing one example of how display module 14A may include an infrared image sensor.

As shown in FIG. 3, display module 14A may include illumination optics 36 that provide illumination light 38 to spatial light modulator 40. Spatial light modulator 40 may modulate images (e.g., a series of frames of image data) onto illumination light 38 to produce image light 22. Image light 22 may be directed towards input coupler 28 of waveguide 26 by collimating optics 34. Collimating optics 34 may include one or more lens elements.

Illumination optics 36 may include one or more light sources. The light sources in illumination optics 36 may include LEDs, OLEDs, uLEDs, lasers, etc. Each light source in illumination optics 36 may emit a respective portion of illumination light 38. If desired, illumination optics 36 may include partially reflective structures such as an X-plate or other optical combiners that combine the light emitted by each of the light sources in illumination optics 36 into illumination light 38. Lens elements (not shown in FIG. 3 for the sake of clarity) may be used to help direct illumination light 38 from illumination optics 36 to spatial light modulator 40 if desired.

Spatial light modulator 40 may include prism 62 (e.g., a prism formed from two or more stacked optical wedges that are optionally provided with one or more reflective or partially reflective coatings). In the example of FIG. 3, spatial light modulator 40 is a reflective spatial light modulator that includes a reflective display panel such as display panel 60. Display panel 60 may be a DMD panel, an LCOS panel, an fLCOS panel, or other reflective display panel. Prism 62 may direct illumination light 38 onto display panel 60 (e.g., different pixels on display panel 60). Control circuitry 16 (FIG. 1) may control display panel 60 to selectively reflect illumination light 38 at each pixel location to produce image light 22 (e.g., image light having an image as modulated onto the illumination light by display panel 60). Prism 62 may direct image light 22 toward collimating optics 34.

In order to further optimize the performance of display module 14A while minimizing volume, spatial light modulator 40 may include a powered prism such as powered prism 65. Powered prism 65 may be mounted to prism 62 or may be spaced apart from prism 62. Illumination light 38 may pass through prism 62 into powered prism 65 and may reflect off of reflective surface 61 of powered prism 65 towards display panel 60. Reflective surface 61 may be curved to impart an optical power to illumination light 38 while also directing the illumination light towards display panel 60. Reflective surface 61 may have a spherical curvature, an aspherical curvature, a freeform curvature, or any other desired curvature. A partially reflective layer such as partially reflective coating 64 may be layered onto reflective surface 61. Partially reflective coating 64 may reflect light at the wavelengths of illumination light 38 (e.g., visible wavelengths) while transmitting light at other wavelengths (e.g., near-infrared and infrared wavelengths). The example of FIG. 3 is merely illustrative and, in other suitable arrangements, reflective surface 61 may be planar or powered prism 65 may be omitted. In scenarios where powered prism 65 is omitted, partially reflective coating 64 may be layered onto the surface of prism 62 opposite display panel 60 or may be layered onto a lens element that is separate from prism 62. In scenarios where spatial light modulator 40 includes powered prism 65, powered prism 65 (e.g., reflective surface 61 and/or partially reflective coating 64) may add optical power to illumination light 38 to match the f-number of display panel 60 while occupying less volume and introducing less chromatic aberration relative to scenarios were separate lenses are used.

Display module 14A may also include infrared imaging module 52. Prism 62 may be optically interposed between display panel 60 and infrared imaging module 52, for example. Infrared imaging module 52 may include infrared image sensor 58 (e.g., a CMOS camera). One or more lens elements such as lens element 56 may be optically interposed between infrared image sensor 58 and prism 62. Infrared image sensor 58 may generate infrared image sensor data based on infrared light received from waveguide 26.

When display module 14A is being used to display a frame of image data at the eye box, illumination optics 36 may emit illumination light 38 and control circuitry 16 may control the pixels of display panel 60 based on the frame of image data to be displayed at the eye box. The state of each pixel in display panel 60 is determined by the frame of image data. The pixels in the display panel may, for example, be in an "ON" state or an "OFF" state depending on the corresponding pixel value in the frame of image data. Display panel 60 may reflect illumination light 38 to produce image light 22 (e.g., display panel 60 may modulate the frame of image data onto illumination light 38 in producing image light 22). Collimating optics 34 may direct image light 22 to input coupler 28.

In the example of FIG. 3, input coupler 28 includes a reflective input coupling prism 50 mounted to the lateral surface of waveguide 26 opposite display module 14A. Reflective input coupling prism 50 has a reflective surface 54 that is tilted at a non-parallel and non-perpendicular angle with respect to the lateral surface of waveguide 26. Reflective surface 54 may also be tilted with respect to the X-Y plane of FIG. 3 and/or may be curved. Reflective input coupling prism 50 may couple image light 22 into waveguide 26. For example, reflective surface 54 may reflect image light 22 into waveguide 26 at an angle such that the image light propagates down the length of waveguide 26 via total internal reflection. An optional reflective layer may be layered onto reflective surface 54 to maximize reflectivity if desired. This example is merely illustrative and, in general, input coupler 28 may include any desired type of input coupler (e.g., input coupler 28 may include a transmissive input coupling prism, one or more mirrors, diffractive grating structures, etc.). Image light 22 may propagate down waveguide 26 until reaching output coupler 30 (FIG. 2), which couples the image light out of the waveguide and towards the eye box.

Waveguide 26 is also used to direct infrared light 66 that has reflected off of the user's eye towards infrared image sensor 58 in display module 14A. For example, waveguide 26 may receive infrared light 66 (e.g., after reflection off of the user's eye) and may propagate the infrared light via total internal reflection towards input coupler 28. Whereas input coupler 28 serves as an input coupler for image light 22, input coupler 28 also serves as an output coupler for infrared light 66. For example, reflective surface 54 of reflective input coupling prism 50 may couple infrared light 66 out of waveguide 26 by reflecting infrared light 66 towards display module 14A. Collimating optics 34 or other lens elements may be used to direct infrared light 66 towards display module 14A. While the same reflective prism (e.g., reflective input coupling prism 50) is used to couple image light 22 into waveguide 26 and to couple infrared light 66 out of waveguide 26 in the example of FIG. 3 according to the invention, waveguide 26 may include an additional output coupler that is separate from input coupler 28 for this function, which is not covered by the claimed subject-matter, that couples infrared light 66 out of waveguide 26 and towards display module 14A, if desired. The additional output coupler may include mirrors, prisms, diffractive gratings, or any other desired output coupling structures.

Prism 62 may direct infrared light 66 towards display panel 60. Display panel 60 may reflect infrared light 66 towards infrared imaging module 52 through prism 62. The infrared light 66 reflected off of display panel 60 may pass through prism 62, powered prism 65, and partially reflective coating 64 to infrared imaging module 52. Lens element 56 in infrared imaging module 52 may focus infrared light 66 onto infrared image sensor 58. Infrared image sensor 58 may generate infrared image sensor data based on the received infrared light 66. The infrared image sensor data may be processed for performing gaze tracking and/or optical alignment operations.

When display panel 60 is being used to provide image light 22 to optical system 14B, display panel 60 may be unable to redirect infrared light 66 towards infrared imaging module 52 (e.g., because the pixels in display panel 60 are being used to reflect illumination light 38 towards input coupler 28 as image light 22 and are therefore not oriented to direct infrared light 66 towards infrared imaging module 52). In order to allow the same display panel 60 to both provide image light 22 to waveguide 26 and to provide infrared light 66 from waveguide 26 to infrared imaging module 52, spatial light modulator 40 may be operated using a time multiplexing scheme. Under the time multiplexing scheme, display panel 60 is only used to either provide image light 22 towards waveguide 26 or to provide infrared light 66 towards infrared imaging module 52 at any given time. For example, the state of each pixel in display panel 60 may be determined by the frame of image data to display while display panel 60 produces image light 22 (e.g., while display panel 60 is operating in a display operating mode). When display panel 60 is directing infrared light 66 towards infrared imaging module 52, the state of each pixel in display panel 60 may be placed in predetermined state (e.g., an "ON" state) in which the infrared light 66 incident upon display panel 60 is reflected towards infrared imaging module 52 (e.g., while display panel 60 is operating in an infrared imaging operating mode). Display panel 60 may toggle between the display operating mode and the infrared imaging operating mode for each frame of image data produced by display module 14A, effectively allowing the display module to continuously display image data while also gathering infrared image sensor data.

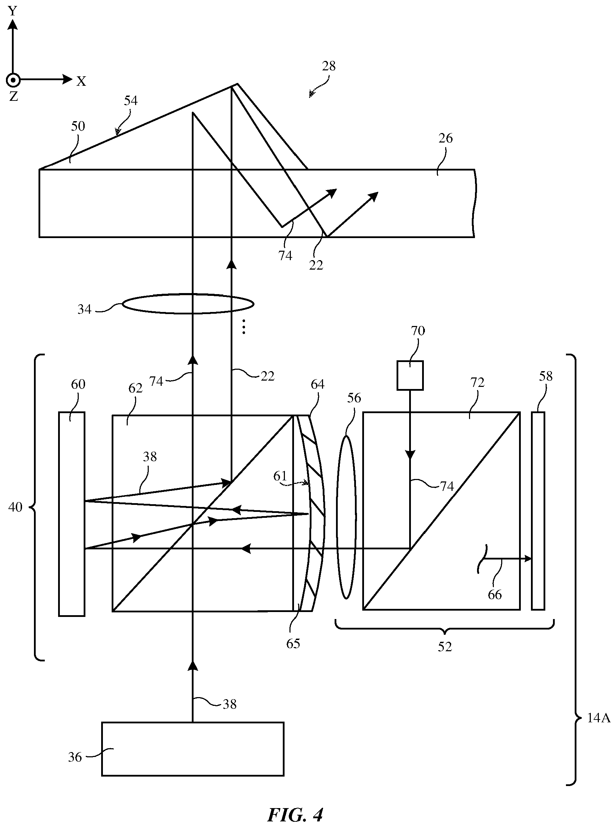

In the example of FIG. 3, infrared light 66 is produced by an infrared emitter that is separate from display module 14A. In order to further reduce space consumption in system 10, display module 14A may include the infrared emitter that is used to produce infrared light 66. FIG. 4 is a diagram showing how display module 14A may include an infrared emitter.

As shown in FIG. 4, infrared imaging module 52 may include a prism such as prim 72. Prism 72 may be optically interposed between lens element 56 and infrared image sensor 58. Infrared imaging module 52 may also include an infrared emitter such as infrared emitter 70. Infrared emitter 70 may be an infrared LED or any other desired light source that emits infrared light. Infrared emitter 70 may also be formed using an array of infrared emitters if desired.

Infrared emitter 70 may emit infrared light 74. Prism 72 may direct infrared light 74 towards display panel 60 via lens element 56, powered prism 65, and prism 62. Display panel 60 may reflect infrared light 74 towards prism 62. Prism 62 may direct infrared light 74 towards input coupler 28 (e.g., via collimating optics 34). Input coupler 28 may couple infrared light 74 into waveguide 26 (e.g., reflective surface 54 may reflect infrared light 74 into waveguide 26). Waveguide 26 may propagate infrared light 74 via total internal reflection. An output coupler (e.g., output coupler 30 of FIG. 2 or a separate output coupler) may couple infrared light 74 out of waveguide 26 and towards the eye box. Infrared light 74 may reflect off of portions of the user's eye (at the eye box) as infrared light 66. Infrared light 66 may then be passed to infrared image sensor 58 of infrared imaging module 52 (e.g., as described above in connection with FIG. 3).

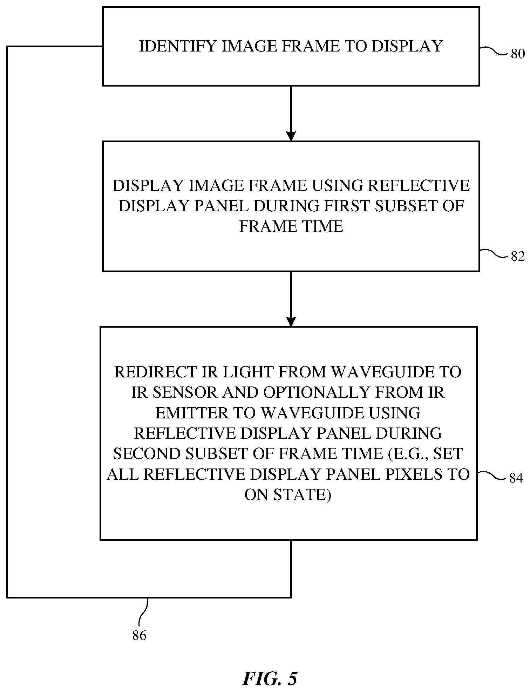

The example of FIG. 4 is merely illustrative. In general, infrared emitter 70 may be located elsewhere within display module 14A. Display panel 60 may reflect infrared light 74 towards waveguide 26 while in the infrared imaging mode (e.g., while display panel 60 is not being used to provide image light 22 to waveguide 26). FIG. 5 is a flow chart of illustrative operations that may be performed in controlling spatial light modulator 40 using a time multiplexing scheme.

At operation 80, control circuitry 16 may identify an image frame (e.g., a frame of image data) to display at eye box 24.

At operation 82, control circuitry 16 may operate display module 14A in the display operating mode. For example, control circuitry 16 may control illumination optics 36 to produce illumination light 38. Control circuitry 16 may concurrently drive display panel 60 using the identified image frame. Display panel 60 may reflect illumination light 38 to modulate the identified image frame onto the illumination light, thereby producing image light 22. Prism 62, collimating optics 34, and waveguide 26 may direct image light 22 towards eye box 24 for view by the user. The identified image frame may have a corresponding frame time. Display module 14A may produce image light 22 using the identified image frame during a first subset of the frame time.

At operation 84, control circuitry 16 may operate display module 14A in the infrared imaging mode. For example, control circuitry 16 may disable illumination optics 36 (e.g., may turn light sources in illumination optics 36 off) so illumination optics 36 no longer produce illumination light 36. At the same time, control circuitry 16 may control an infrared light source (e.g., infrared emitter 70 of FIG. 4 or another infrared emitter in the system) to emit infrared light 74. Control circuitry 16 may place all of the pixels in display panel 60 in a predetermined state (e.g., an "ON" state). While in the predetermined state, the pixels of display panel 60 may reflect the infrared light 74 towards waveguide 26 (e.g., in scenarios where infrared imaging module 52 includes infrared emitter 70). At the same time, the pixels of display panel 60 may reflect infrared light 66 (e.g., the infrared light 74 that has been reflected off of the user's eye) from waveguide 26 and towards infrared image sensor 58.

Infrared image sensor 58 may generate infrared image sensor data based on the received infrared light 66. Control circuitry 16 may process the infrared image sensor data to identify/track the location of the user's gaze (e.g., for updating content to be displayed in image light 22 or for performing other operations) and/or to assess the optical alignment between the left and right eye boxes. Display panel 60 may direct infrared light 66 towards infrared image sensor 58 and may direct infrared light 74 towards waveguide 26 (in scenarios where infrared imaging module 52 includes infrared emitter 70) during a second subset of the frame time. Processing may subsequently loop back to step 80, as shown by path 86, as additional image frames (e.g., from a stream of image frames) are processed and displayed at the eye box.

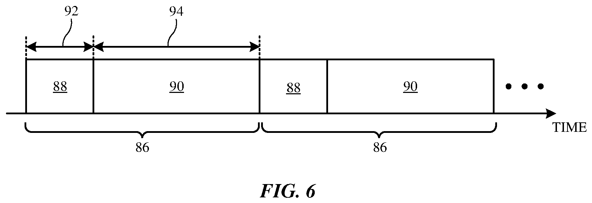

FIG. 6 is a timing diagram associated with the time multiplexing scheme of FIG. 5. As shown in FIG. 6, each identified image frame may be displayed by display module 14A during a respective frame time 86. Display module 14A may be in the display operating mode and may convey image light 22 that includes the image data from the corresponding image frame during a first subset 88 of each frame time 86 (e.g., while processing operation 82 of FIG. 5). Display module 14A may be in the infrared imaging operating mode and may convey infrared light 66 and/or infrared light 74 during a second subset 90 of each frame time 86 (e.g., while processing operation 84 of FIG. 5).

The first subset 88 of each frame time 86 may have a duration 92. The second subset 90 of each frame time 86 may have a duration 94. Duration 94 may be longer than duration 92. As just one example, duration 92 may be approximately 1-3 ms whereas duration 94 is approximately 5-7 ms. When operating at a frame rate of 120 Hz, frame time 86 may be approximately 8.3 ms, as one example. Other frame rates may be used if desired. Each frame time 86 may also include a third subset during which the corresponding image data is loaded into a frame buffer for display panel 60. A portion of second subset 90 may also be used to load the image data into the frame buffer. By taking advantage of the portion of each frame time 86 where image light is not being provided to the eye box, display module 14A may gather infrared image sensor data using display panel 60 without affecting the image light provided to the user, thereby ensuring that the user's viewing experience is uninterrupted by the infrared imaging operations.

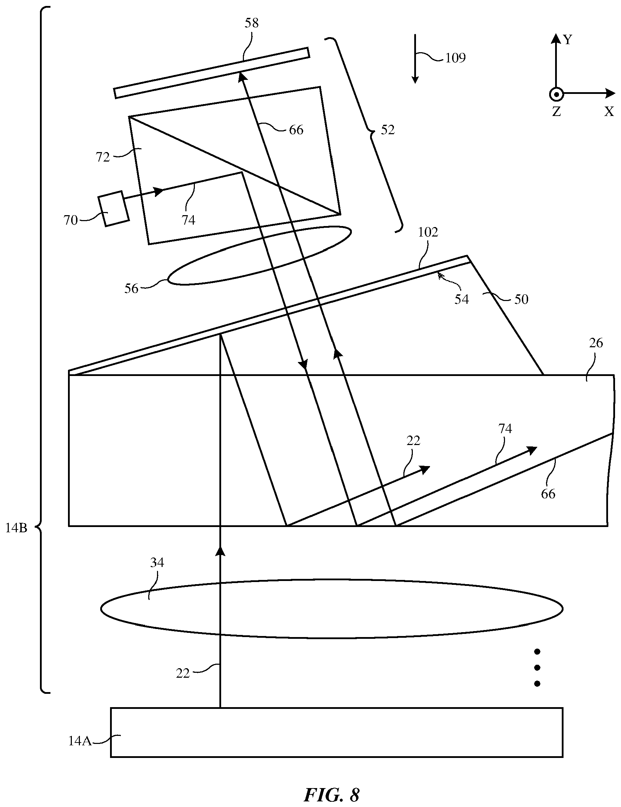

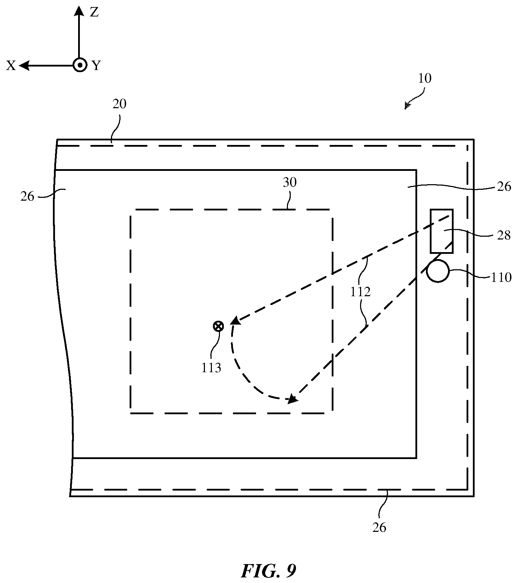

System 10 may additionally or alternatively include other image sensors such as a world-facing camera. FIG. 9 is a front view of system 10 (e.g., as taken in the direction of arrow 109 of FIG. 8) showing one example of how system 10 may include a world-facing camera. As shown in FIG. 9, waveguide 26 may be mounted to housing 20 (e.g., a peripheral portion or region of waveguide 26 may be mounted to a frame formed from housing 20). Waveguide 26 may also partially or completely overlap housing 20 (e.g., when viewed in the -Y direction of FIG. 9).

As shown in FIG. 9, input coupler 28 may be mounted to waveguide 26 at or adjacent to the periphery of waveguide 26. Input coupler 28 may, for example, partially or completely overlap housing 20. Input coupler 28 may couple image light 22 into waveguide 26, as shown by arrows 112. Waveguide 26 may propagate the image light towards output coupler 30 via total internal reflection. Cross-coupler 32 of FIG. 2 may also operate on the image light if desired. Output coupler 30 may couple the image light associated with arrows 112 out of waveguide 26 and towards the eye box (e.g., in the -Y direction), as shown by arrow 113.

A world-facing camera such as world-facing camera 110 may be mounted to housing 20 at or adjacent to input coupler 28. World-facing camera 110 may partially or completely overlap waveguide 26 (e.g., a peripheral region at or adjacent to the lateral edge of waveguide 26 may at least partially cover world-facing camera 110 from the perspective of the external world). World-facing camera 110 may generate image sensor data (e.g., infrared image sensor data, visible light image sensor data, etc.) in response to real-world light received from real-world objects (e.g., object 25 of FIG. 1) through the lateral surface of waveguide 26.

If care is not taken, the scattering of image light 22 at waveguide 26 may create visible light artifacts around or over world-facing camera 110. If care is not taken, this image light may be captured by world-facing camera 110 and may create undesirable artifacts in the images of real-world objects captured by world-facing camera 110. In order to mitigate these issues, display module 14A and world-facing camera 110 may be operated using a time multiplexing scheme.

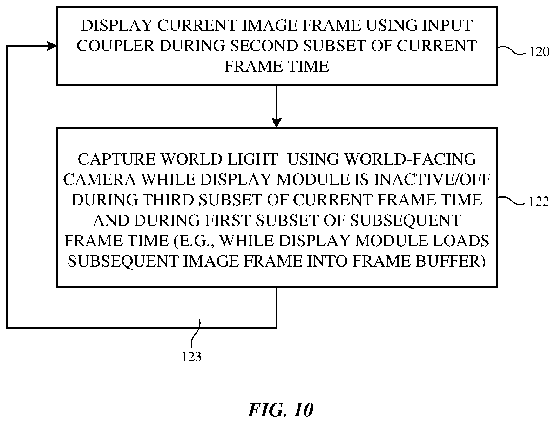

FIG. 10 is a flow chart of illustrative operations that may be performed in controlling display module 14A and world-facing camera 110 using a time multiplexing scheme.

At operation 120, display module 14A may display a current image frame using input coupler 28. Display module 14A may display the current image frame during a second subset of the frame time associated with the current image frame (sometimes referred to herein as the current frame time). Input coupler 28 may couple the corresponding image light 22 into waveguide 26. The first subset of the current frame time may be used to load the current image frame into the frame buffer for display panel 60, for example. While display module 14A is displaying image light 22 (e.g., during the second subset of the current frame time), world-facing camera 110 may be inactive, turned off, or may otherwise operate without gathering image sensor data.

At operation 122, display module 14A may be inactive, turned off, or may otherwise operate without generating image light 22. At the same time, world-facing camera 110 may generate image sensor data based on real-world light received from real-world objects through waveguide 26. World-facing camera 110 may generate the image sensor data (and display module 14A may be inactive) during a third subset of the current frame time. If desired, world-facing camera 110 may also generate the image sensor data during the first subset of the frame time associated with the subsequent image frame (sometimes referred to herein as the subsequent frame time). The subsequent image frame may, for example, be loaded into the frame buffer for display panel 60 during the first subset of the subsequent frame time. Processing may subsequently loop back to operation 120, as shown by path 123, as system 10 continues to display image frames from a stream of image frames at the eye box. By only capturing image sensor data using world-facing camera 110 during the portion of each frame time in which image light 22 is not being displayed, system 10 can use world-facing camera 110 to capture images of the real world in front of system 10 without undesirable artifacts from the image light.

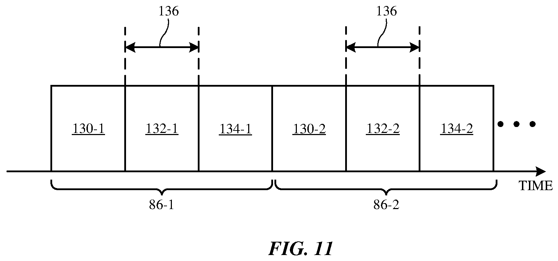

FIG. 11 is a timing diagram associated with the time multiplexing scheme of FIG. 10. As shown in FIG. 11, display module 14A may display a first image frame (e.g., a current image frame) during current frame time 86-1. Display module 14A may display a second image frame (e.g., a subsequent image frame) during subsequent frame time 86-2.

During first subset 130-1 of current frame time 86-1, control circuitry 16 may load the current image frame into the frame buffer for display panel 60. Display module 14A does not produce image light 22 during the first subset 130-1 of current frame time 86-1. If desired, world-facing camera 110 may capture image sensor data during the first subset 130-1 of current frame time 86-1.

During second subset 132-1 of current frame time 86-1, display module 14A may display the current image frame at eye box 24 using image light 22. World-facing camera 110 may be inactive during the second subset 132-1 of current frame time 86-1. This may serve to prevent the world-facing camera from capturing undesirable image artifacts produced by the scattering of image light 22 at waveguide 26.

During third subset 134-1 of current frame time 86-1, world-facing camera 110 may capture image sensor data through waveguide 26. Display module 14A does not produce image light 22 during the third subset 134-1 of current frame time 86-1.

During first subset 130-2 of subsequent frame time 86-2, control circuitry 16 may load the subsequent image frame into the frame buffer for display panel 60. Display module 14A does not produce image light 22 during the first subset 130-2 of subsequent frame time 86-2. If desired, world-facing camera 110 may continue to capture image sensor data during the first subset 130-2 of subsequent frame time 86-2. This may allow world-facing camera 110 to capture image sensor data for a continuous duration of around 6 ms across the current and subsequent frame times, as one example.

During second subset 132-2 of subsequent frame time 86-2, display module 14A may display the subsequent image frame at eye box 24 using image light 22. World-facing camera 110 may be inactive during the second subset 132-2 of subsequent frame time 86-2. This may serve to prevent the world-facing camera from capturing undesirable image artifacts produced by the scattering of image light 22 at waveguide 26.

During third subset 134-2 of subsequent frame time 86-2, world-facing camera 110 may capture image sensor data through waveguide 26. Display module 14A does not produce image light 22 during the third subset 134-2 of current frame time 86-2. This process may be continued as each image frame from a stream of image frames is displayed at the eye box. The example of FIG. 11 is merely illustrative and, if desired, other time multiplexing schemes may be used.

As described above, one aspect of the present technology is the gathering and use of data available from various sources to improve the delivery of images to users and/or to perform other display-related operations. The present disclosure contemplates that in some instances, this gathered data may include personal information data that uniquely identifies or can be used to contact or locate a specific person. Such personal information data can include facial recognition data, gaze tracking data, demographic data, location-based data, telephone numbers, email addresses, twitter ID's, home addresses, data or records relating to a user's health or level of fitness (e.g., vital signs measurements, medication information, exercise information), date of birth, or any other identifying or personal information.

In accordance with the invention, a display system is provided that includes illumination optics configured to generate illumination light; an image sensor; a waveguide having an input coupler configured to couple image light into the waveguide and having an output coupler configured to couple the image light out of the waveguide; and a reflective display panel having first and second operating modes, in the first operating mode, the reflective display panel is configured to generate the image light by modulating the illumination light using image data and, in the second operating mode, the reflective display panel is configured to reflect light from the waveguide towards the image sensor.

The input coupler is configured to couple the light out of the waveguide and towards the reflective display panel.

In accordance with another embodiment, the input coupler includes a reflective input coupling prism mounted to the waveguide.

In accordance with another embodiment, the display system includes a prism, the prism is configured to direct the illumination light towards the reflective display panel, the prism is configured to direct the image light towards the input coupler, the prism is configured to direct the light from the waveguide towards the reflective display panel, and the prism is configured to direct the light towards the image sensor after the light has reflected off of the reflective display panel.

In accordance with another embodiment, the prism is interposed between the reflective display panel and the image sensor.

In accordance with another embodiment, the display system includes an additional prism interposed between the prism and the image sensor; and an infrared emitter configured to emit additional light, the additional prism is configured to direct the additional infrared light towards the reflective display panel, the additional prism is configured to direct the infrared light that has reflected off of the reflective display panel towards the image sensor and, in the second operating mode, the reflective display panel is configured to reflect the additional light towards the waveguide, the light being a version of the additional light that has reflected off of an object external to the display system.

In accordance with another embodiment, the display system includes a powered prism interposed between the prism and the additional prism; and a partially reflective coating on the powered prism, the partially reflective coating is configured to reflect the illumination light and transmit the light.

In accordance with another embodiment, the reflective display panel includes pixels, the pixels are driven using the image data while the reflective display panel is in the first operating mode, and each of the pixels is in a predetermined state while the reflective display panel is in the second operating mode.

In accordance with another embodiment, each of the pixels is in an ON state while the reflective display panel is in the second operating mode.

In accordance with another embodiment, the image data includes a series of image frames, each image frame in the series of image frames has an associated frame time, and the reflective display panel switches between the first and second operating modes during the frame time for each of the image frames in the series of image frames.

In accordance with another embodiment, the reflective display panel includes a display panel selected from the group consisting of: a digital micromirror device (DMD) display panel, a liquid crystal on silicon (LCOS) display panel, and a ferroelectric liquid crystal on silicon (fLCOS) display panel.

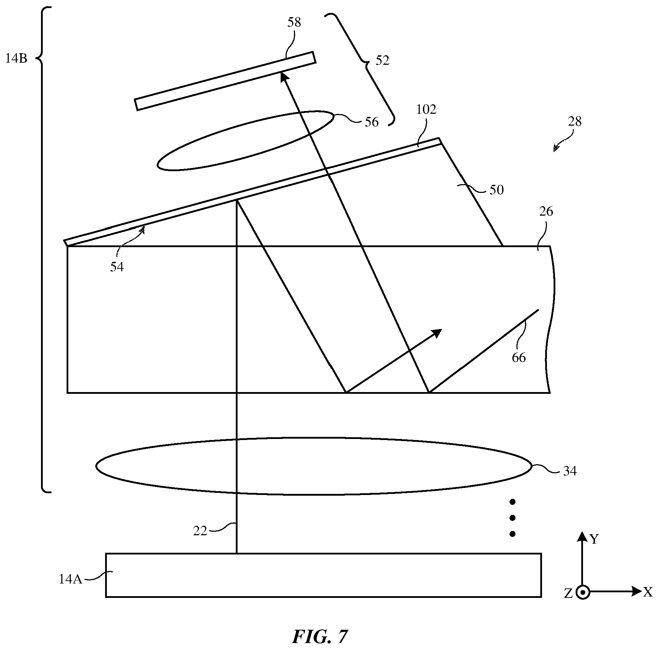

The additional arrangements described with reference to FIGS. 7 and 8, in which an image sensor is positioned adjacent to a prism directing the infrared light hereto are not covered by the claimed subject-matter and thus are not part of the present invention.

In accordance with another embodiment, the display system includes a partially reflective coating on the reflective surface, the partially reflective coating is configured to reflect visible wavelengths of light while transmitting infrared wavelengths of light.

In accordance with another embodiment, the display system includes an infrared emitter configured to emit, into the waveguide through the reflective input coupling prism and the reflective surface, infrared light corresponding to the reflected light, the waveguide being configured to propagate the infrared light via total internal reflection.

In accordance with another embodiment, the display system includes a prism, the prism is configured to direct the infrared light from the infrared emitter towards the reflective input coupling prism and the prism is configured to direct the reflected light from the reflective surface towards the image sensor.

In accordance with another embodiment, the display system includes control circuitry configured to perform gaze tracking operations based on the reflected light received by the image sensor.

In accordance with an embodiment, a display system is provided that includes a housing; a waveguide having a peripheral region mounted to the housing; an input coupler on the waveguide and configured to couple image light into the waveguide, the image light includes an image frame having a corresponding frame time; an output coupler on the waveguide and configured to couple the image light out of the waveguide; a world-facing camera mounted to the housing adjacent the input coupler and overlapping the peripheral region of the waveguide; and a projector configured to generate the image light during a first subset of the frame time, the world-facing camera is inactive during the first subset of the frame time, the projector is inactive during a second subset of the frame time, and the world-facing camera is configured to capture image sensor data in response to real-world light received through the peripheral region of the waveguide during the second subset of the frame time.

In accordance with another embodiment, the image light includes an additional image frame having an additional frame time subsequent to the frame time, the projector is configured to load the additional image frame into a frame buffer during a first subset of the additional frame time, and the world-facing camera is configured to capture additional image sensor data in response to the real-world light received through the waveguide during the first subset of the additional frame time.

In accordance with another embodiment, the projector is configured to generate the image light during a second subset of the additional frame time and the world-facing camera is inactive during the second subset of the additional frame time.

In accordance with another embodiment, the second subset of the frame time is subsequent to the first subset of the frame time, the first subset of the additional frame time is subsequent to the second subset of the frame time, and the second subset of the additional frame time is subsequent to the first subset of the additional frame time.

The foregoing is merely illustrative and various modifications can be made to the described embodiments. The foregoing embodiments may be implemented individually or in any combination according to the scope of protection defined in the appended set of claims.

## Claims

1. A display system (10) comprising:
illumination optics (36) configured to generate visible illumination light (38);
an image sensor (58);
a waveguide (26) having an optical coupler (28) configured to couple visible image light (22) into the waveguide (26) and having an output coupler (30) configured to couple the visible image light out of the waveguide; and
a reflective display panel (60) having first and second operating modes wherein, in the first operating mode, the reflective display panel (60) is configured to generate the visible image light (22) by modulating the visible illumination light (38) using image data and wherein, in the second operating mode, the reflective display panel (60) is configured to reflect infrared light (66) from the waveguide (26) towards the image sensor (58), and wherein the optical coupler (28) is further configured to couple the infrared light (66) out of the waveguide (26) and towards the reflective display pane (60).

2. The display system of claim 1, wherein the optical coupler comprises a reflective input coupling prism (50) mounted to the waveguide.

3. The display system of claim 1, further comprising:
a prism (62), wherein the prism is configured to direct the visible illumination light towards the reflective display panel, the prism is configured to direct the visible image light towards the optical coupler, the prism is configured to direct the infrared light from the waveguide towards the reflective display panel, and the prism is configured to direct the infrared light towards the image sensor after the infrared light has reflected off of the reflective display panel.

4. The display system of claim 3, wherein the prism (62) is interposed between the reflective display panel and the image sensor.

5. The display system of claim 4, further comprising:
an additional prism (72) interposed between the prism and the image sensor; and
an infrared emitter (70) configured to emit additional infrared light, wherein the additional prism is configured to direct the additional infrared light (74) towards the reflective display panel, the additional prism is configured to direct the infrared light that has reflected off of the reflective display panel towards the image sensor and, in the second operating mode, the reflective display panel is configured to reflect the additional infrared light towards the waveguide, the infrared light being a version of the additional infrared light that has reflected off of an object external to the display system.

6. The display system of claim 4, further comprising:
a powered prism (65) interposed between the prism (62) and the additional prism (72); and
a partially reflective coating (64) on the powered prism, wherein the partially reflective coating is configured to reflect the visible illumination light (38) and transmit the infrared light (66, 74).

7. The display system of claim 1, wherein the reflective display panel comprises pixels, the pixels are driven using the image data while the reflective display panel is in the first operating mode, and each of the pixels is in a predetermined state while the reflective display panel is in the second operating mode.

8. The display system of claim 7, wherein each of the pixels is in an ON state while the reflective display panel is in the second operating mode.

9. The display system of claim 1, wherein the image data comprises a series of image frames, each image frame in the series of image frames has an associated frame time (86), and the reflective display panel switches between the first and second operating modes during the frame time for each of the image frames in the series of image frames.

10. The display system of claim 1, wherein the reflective display panel comprises a display panel selected from the group consisting of: a digital micromirror device, DMD, display panel, a liquid crystal on silicon, LCOS, display panel, and a ferroelectric liquid crystal on silicon, fLCOS, display panel.

## Patentansprüche

1. Anzeigesystem (10), umfassend:
Beleuchtungsoptik (36), die konfiguriert ist, um sichtbares Beleuchtungslicht (38) zu erzeugen;
einen Bildsensor (58);
einen Wellenleiter (26) mit einem optischen Koppler (28), der konfiguriert ist, um sichtbares Bildlicht (22) in den Wellenleiter (26) einzukoppeln, und mit einem Ausgangskoppler (30), der konfiguriert ist, um das sichtbare Bildlicht aus dem Wellenleiter auszukoppeln; und
ein reflektierendes Anzeigefeld (60) mit einem ersten und einem zweiten Betriebsmodus, wobei das reflektierende Anzeigefeld (60) in dem ersten Betriebsmodus konfiguriert ist, um das sichtbare Bildlicht (22) durch Modulieren des sichtbaren Beleuchtungslichts (38) unter Verwendung von Bilddaten zu erzeugen, und wobei das reflektierende Anzeigefeld (60) in dem zweiten Betriebsmodus konfiguriert ist, um Infrarotlicht (66) aus dem Wellenleiter (26) in Richtung des Bildsensors (58) zu reflektieren, und wobei der optische Koppler (28) ferner konfiguriert ist, um das Infrarotlicht (66) aus dem Wellenleiter (26) heraus und in Richtung des reflektierenden Anzeigefelds (60) zu koppeln.

2. Anzeigesystem nach Anspruch 1, wobei der optische Koppler ein reflektierendes Eingangskopplungsprisma (50) umfasst, das an dem Wellenleiter montiert ist.

3. Anzeigesystem nach Anspruch 1, ferner umfassend:
ein Prisma (62), wobei das Prisma konfiguriert ist, um das sichtbare Beleuchtungslicht in Richtung des reflektierenden Anzeigefelds zu lenken, das Prisma konfiguriert ist, um das sichtbare Bildlicht in Richtung des optischen Kopplers zu lenken, das Prisma konfiguriert ist, um das Infrarotlicht aus dem Wellenleiter in Richtung des reflektierenden Anzeigefelds zu lenken, und das Prisma konfiguriert ist, um das Infrarotlicht in Richtung des Bildsensors zu lenken, nachdem das Infrarotlicht von dem reflektierenden Anzeigefeld reflektiert wurde.

4. Anzeigesystem nach Anspruch 3, wobei das Prisma (62) zwischen dem reflektierenden Anzeigefeld und dem Bildsensor angeordnet ist.

5. Anzeigesystem nach Anspruch 4, ferner umfassend:
ein zusätzliches Prisma (72), das zwischen dem Prisma und dem Bildsensor angeordnet ist; und
einen Infrarotemitter (70), der konfiguriert ist, um zusätzliches Infrarotlicht zu emittieren, wobei das zusätzliche Prisma konfiguriert ist, um das zusätzliche Infrarotlicht (74) in Richtung des reflektierenden Anzeigefelds zu lenken, das zusätzliche Prisma konfiguriert ist, um das Infrarotlicht, das von dem reflektierenden Anzeigefeld reflektiert wurde, in Richtung des Bildsensors zu lenken, und das reflektierende Anzeigefeld in dem zweiten Betriebsmodus konfiguriert ist, um das zusätzliche Infrarotlicht in Richtung des Wellenleiters zu reflektieren, wobei das Infrarotlicht eine Version des zusätzlichen Infrarotlichts ist, das von einem Objekt außerhalb des Anzeigesystems reflektiert wurde.

6. Anzeigesystem nach Anspruch 4, ferner umfassend:
ein angetriebenes Prisma (65), das zwischen dem Prisma (62) und dem zusätzlichen Prisma (72) angeordnet ist; und
eine teilweise reflektierende Beschichtung (64) auf dem angetriebenen Prisma, wobei die teilweise reflektierende Beschichtung konfiguriert ist, um das sichtbare Beleuchtungslicht (38) zu reflektieren und das Infrarotlicht (66, 74) durchzulassen.

7. Anzeigesystem nach Anspruch 1, wobei das reflektierende Anzeigefeld Pixel umfasst, die Pixel unter Verwendung der Bilddaten angesteuert werden, während sich das reflektierende Anzeigefeld in dem ersten Betriebsmodus befindet, und sich jedes der Pixel in einem vorbestimmten Zustand befindet, während sich das reflektierende Anzeigefeld in dem zweiten Betriebsmodus befindet.

8. Anzeigesystem nach Anspruch 7, wobei sich jedes der Pixel in einem EIN-Zustand befindet, während sich das reflektierende Anzeigefeld in dem zweiten Betriebsmodus befindet.

9. Anzeigesystem nach Anspruch 1, wobei die Bilddaten eine Reihe von Bildrahmen umfassen, jeder Bildrahmen in der Reihe von Bildrahmen eine zugehörige Rahmenzeit (86) aufweist und das reflektierende Anzeigefeld während der Rahmenzeit für jeden der Bildrahmen in der Reihe von Bildrahmen zwischen dem ersten und dem zweiten Betriebsmodus umschaltet.

10. Anzeigesystem nach Anspruch 1, wobei das reflektierende Anzeigefeld ein Anzeigefeld umfasst, das ausgewählt ist aus der Gruppe bestehend aus: einem Digital-Micromirror-Device-Anzeigefeld (DMD-Anzeigefeld), einem Liquid-Crystal-on-Silicon-Anzeigefeld (LCOS-Anzeigefeld) und einem ferroelektrischen Liquid-Crystal-on-Silicon-Anzeigefeld (fLCOS-Anzeigefeld).

## Revendications

1. Système d'affichage (10) comprenant :
une optique d'éclairage (36) configurée pour générer de la lumière d'éclairage visible (38) ;
un capteur d'image (58) ;
un guide d'ondes (26) ayant un coupleur optique (28) configuré pour coupler de la lumière d'image visible (22) dans le guide d'ondes (26) et ayant un coupleur de sortie (30) configuré pour coupler de la lumière d'image visible hors du guide d'ondes ; et
un panneau d'affichage réfléchissant (60) ayant des premier et second modes de fonctionnement dans lequel, dans le premier mode de fonctionnement, le panneau d'affichage réfléchissant (60) est configuré pour générer la lumière d'image visible (22) en modulant la lumière d'éclairage visible (38) à l'aide de données d'image et dans lequel, dans le second mode de fonctionnement, le panneau d'affichage réfléchissant (60) est configuré pour réfléchir de la lumière infrarouge (66) provenant du guide d'ondes (26) vers le capteur d'image (58), et dans lequel le coupleur optique (28) est en outre configuré pour coupler la lumière infrarouge (66) hors du guide d'ondes (26) et vers le panneau d'affichage réfléchissant (60).

2. Système d'affichage selon la revendication 1, dans lequel le coupleur optique comprend un prisme de couplage d'entrée réfléchissant (50) monté sur le guide d'ondes.

3. Système d'affichage selon la revendication 1, comprenant en outre :
un prisme (62), dans lequel le prisme est configuré pour diriger la lumière d'éclairage visible vers le panneau d'affichage réfléchissant, le prisme est configuré pour diriger la lumière d'image visible vers le coupleur optique, le prisme est configuré pour diriger la lumière infrarouge provenant du guide d'ondes vers le panneau d'affichage réfléchissant, et le prisme est configuré pour diriger la lumière infrarouge vers le capteur d'image après que la lumière infrarouge a été réfléchie par le panneau d'affichage réfléchissant.

4. Système d'affichage selon la revendication 3, dans lequel le prisme (62) est interposé entre le panneau d'affichage réfléchissant et le capteur d'image.

5. Système d'affichage selon la revendication 4, comprenant en outre :
un prisme supplémentaire (72) interposé entre le prisme et le capteur d'image ; et
un émetteur infrarouge (70) configuré pour émettre une lumière infrarouge supplémentaire, dans lequel le prisme supplémentaire est configuré pour diriger la lumière infrarouge supplémentaire (74) vers le panneau d'affichage réfléchissant, le prisme supplémentaire est configuré pour diriger la lumière infrarouge qui s'est réfléchie sur le panneau d'affichage réfléchissant vers le capteur d'image et, dans le second mode de fonctionnement, le panneau d'affichage réfléchissant est configuré pour réfléchir la lumière infrarouge supplémentaire vers le guide d'ondes, la lumière infrarouge étant une version de la lumière infrarouge supplémentaire qui s'est réfléchie sur un objet externe vers le système d'affichage.

6. Système d'affichage selon la revendication 4, comprenant en outre :
un prisme alimenté (65) interposé entre le prisme (62) et le prisme supplémentaire (72) ; et
un revêtement partiellement réfléchissant (64) sur le prisme alimenté, dans lequel le revêtement partiellement réfléchissant est configuré pour réfléchir la lumière d'éclairage visible (38) et transmettre la lumière infrarouge (66, 74).

7. Système d'affichage selon la revendication 1, dans lequel le panneau d'affichage réfléchissant comprend des pixels, les pixels sont excités à l'aide des données d'image pendant que le panneau d'affichage réfléchissant est dans le premier mode de fonctionnement, et chacun des pixels est dans un état prédéterminé pendant que le panneau d'affichage réfléchissant est dans le second mode de fonctionnement.

8. Système d'affichage selon la revendication 7, dans lequel chacun des pixels est dans un état activé pendant que le panneau d'affichage réfléchissant est dans le second mode de fonctionnement.

9. Système d'affichage selon la revendication 1, dans lequel les données d'image comprennent une série de trames d'image, chaque trame d'image de la série de trames d'image a une durée de trame (86) associée, et le panneau d'affichage réfléchissant commute entre les premier et second modes de fonctionnement pendant la durée de trame pour chacune des trames d'image de la série de trames d'image.

10. Système d'affichage selon la revendication 1, dans lequel le panneau d'affichage réfléchissant comprend un panneau d'affichage choisi dans le groupe constitué : d'un panneau d'affichage à matrice à micromiroirs, DMD, d'un panneau d'affichage à cristaux liquides sur silicium, LCOS, et d'un panneau d'affichage à cristaux liquides ferroélectriques sur silicium, fLCOS.
